Europäisches Patentamt

European Patent Office

Office européen des brevets

(11) Publication number: **0 218 958 B1**

(12) **EUROPEAN PATENT SPECIFICATION**

(45) Date of publication of patent specification: **06.03.91**

(51) Int. Cl.⁵: **B01D 53/00**, B01D 53/34, C12N 1/00

(21) Application number: **86113109.2**

(22) Date of filing: **24.09.86**

(54) Microbiological desulfurization of gases.

(30) Priority: **15.10.85 US 787219**

(43) Date of publication of application:
**22.04.87 Bulletin 87/17**

(45) Publication of the grant of the patent:
**06.03.91 Bulletin 91/10**

(84) Designated Contracting States:
**DE FR GB IT NL**

(56) References cited:
**EP-A- 0 186 925**

**PATENT ABSTRACTS OF JAPAN, volume 7, no. 273 (C-198)(1418),6th. December 1983; & JP-A-58152488 (SUMITOMO JUKIKAI EN- VIROTECH K.K.) 10-09-1983**

**ARCHIV FÜR MIKROBIOLOGIE, volume 20, 1954, pages 34-62; K. Baalsrud et al.: "Studies on Thiobacillus denitrificans"**

(73) Proprietor: **COMBUSTION ENGINEERING, INC.**
**1000 Prospect Hill Road Box 500**
**Windsor Connecticut 06095-0500(US)**

(72) Inventor: **Sublette, Kerry Lyn**
**6815 E. 47th Street**
**Tulsa Oklahoma 74145(US)**

(74) Representative: **Gross, Gernot K.**
**Kleiberweg 5**
**W-6200 Wiesbaden(DE)**

Rank Xerox (UK) Business Services

## Description

BACKGROUND OF THE INVENTION

This invention relates to the desulfurization of gases and, in particular, relates to the microbiological desulfurization of natural gas.

Conventional Acid Gas Removal

Natural gas from a well may contain a number of undesirable components which must be reduced to acceptable levels prior to distribution and sale. One of the most common problems in the gas industry is the removal of hydrogen sulfide. Hydrogen sulfide is an acid gas which is toxic and quite corrosive in the presence of water. Natural gas destined for the fuel market ordinarily may contain no more than 0.25 grains per 100 standard cubic feet or 4 ppm on a volume basis.

There is a wide variety of commercially available acid gas removal processes. These may be organized into three broad groups based on the mechanism of removal, namely, chemical solvent processes, physical solvent processes and solid bed and slurry processes. In chemical solvent processes, the gas stream is normally contacted with a liquid phase containing a reagent which reacts chemically with the acid gas to produce a species which is retained in the liquid phase at one temperature but released at some elevated temperature. The most commercially important process of this type is the amine process. In the amine process after contacting the gas stream, the solvent is heated to 200-300F to liberate $H_2S$ and regenerate the solvent. The $H_2S$ removed from the gas stream is normally flared or converted to elemental sulfur by the Claus or Stretford process. In another type of chemical solvent process, the gas stream is contacted with a liquid phase or solvent containing a reagent which oxidizes hydrogen sulfide to produce elemental sulfur. Sulfur is typically removed by floatation or filtering. The oxidizing agent is then regenerated by aeration of the solvent.

In a physical solvent process a natural gas stream is contacted with a liquid phase in which acid gases simply dissolve under pressure while hydrocarbons are excluded. After contacting the gas stream, dissolved acid gases are generally released when pressure is reduced. As in the amine process, physical solvent processes remove and collect acid gases from a natural gas stream; however, further treatment is required to eliminate hydrogen sulfide.

In the common solid bed and slurry processes the natural gas stream is contacted with a solid phase which physically adsorbs hydrogen sulfide or chemically reacts with hydrogen sulfide to form an insoluble and non-volatile metallic sulfide which is retained in the bed. An example of a solid bed process is the iron oxide or iron sponge process. In this process the gas stream is contacted with moist iron oxide supported on a bed of wood shavings. Hydrogen sulfide reacts with the iron oxide to form iron sulfide which is retained in the bed. When the iron oxide has been depleted, the bed can be regenerated with oxygen which converts the iron sulfide to oxide and elemental sulfur. Eventually, however, elemental sulfur accumulates to the point that much of the remaining iron oxide surface area is unavailable to $H_2S$ or excessive pressure drop develops. The bed material must then be replaced.

Several factors adversely affect the economics of conventional $H_2S$ removal processes. The amine process, for example, is energy intensive due to the high temperatures required for solvent regeneration. Degradation during thermal regeneration can create disposal problems and amine salts produced in the process are corrosive. Also, a sulfur recovery plant may be required. Although a direct conversion process is conceptually less complicated than the amine process, in practice the direct conversion processes currently available are plagued by a complex chemistry which requires close attention, high chemical make-up costs and disposal problems. In addition, the elemental sulfur produced in these processes is generally of such a poor quality that it is a waste product rather than a process credit.

There are generally fewer problems associated with physical solvent processes. However, these processes are only economically viable when the acid gases are present at high partial pressures. Also, hydrogen sulfide disposal may significantly impact the economics of a physical solvent process. Furthermore, many of the common physical solvents utilized for acid gas removal do not totally exclude the $C_3+$ hydrocarbons thus resulting in hydrocarbon loss and a reduction in the heating value of the natural gas stream.

Solid bed and slurry processes are generally simple to operate but labor intensive when the bed material must be replaced. In addition, disposal of the reaction product, with certain processes, require a hazardous waste disposal site.

Microbial Removal of Hydrogen Sulfide from a Gas

Microbiological processes for the removal of hydrogen sulfide from a gas stream have been described previously. One process is described in Japanese Patent Application No. 170,181/82 which utilizes a mixed culture of bacteria from the Beggiatoa and Thiothrix genera.

This is an aerobic process with the predominant end product being elemental sulfur. Another process is described in U.S.S.R. Patent No. 986,469 which involves contacting a hydrogen sulfide containing gas with a culture of Thiobacillus thioparus . This is also an aerobic process with the end product being a sulfate. Both of these processes are intended for waste gas clean-up. Given the requirement for oxygen, neither of these processes would be suitable for the treatment of natural gas unless a complicated process were used which provided for the absorption of hydrogen sulfide in a different stage from the oxidation of the hydrogen sulfide so as to prevent oxygen contamination of the gas. Such two stage processes have been described in West DE-C- 3 300 402 and Japanese Patent No. 58,152,488. In these processes $H_2S$ is first precipitated as CuS or FeS, respectively, which is oxidized aerobically to sulfate in a second stage by Thiobacillus ferroxidans . The precipitating agent is regenerated in the second stage. These processes require a very low, corrosion inducing pH in the second stage.

A microbial process for the removal of $H_2S$ from a gas stream based on the photosynthetic bacterium Chlorobium thiosulfatophilum as an alternative to the Claus or Stretford process has been proposed. (Cork, D. J., "Acid Gas Bioconversion - An Alternative to the Claus Process," Dev. Ind. Micro., 23 , 379-387 (1982), Cork, D. J. and S. Ma., "Acid Gas Bioconversion Favors Sulfur Production," Biotech. and Bioeng. Symp. No. 12, 285-290 (1982) and Cork, D. J., R. Garunas and A. Sajjad, " Chlorobium limicola forma thiosulfatophilum : Biocatalyst in the Production of Sulfur and Organic Carbon from a Gas Stream Containing $H_2S$ and $CO_2$," Appl. and Env. Micro., 45, 913-918 (1983)). The process converts $H_2S$ into elemental sulfur and sulfate and claims sulfur and biomass as process credits. However, the requirement for radiant energy is a severe economic disadvantage whether supplied artificially or collected from sunlight.

SUMMARY OF THE INVENTION

An object of the present invention is to provide a method for desulfurizing gases by microbiological techniques. More particularly, the invention involves the use of chemoautotrophic bacteria of the Thiobacillus genus to convert sulfides to sulfates either as a sulfide removal process or as a process for producing biomass. More specifically, the invention involves the use of Thiobacillus denitrificans under anaerobic conditions to oxidize sulfur compounds such as hydrogen sulfide to sulfate compounds. A particular embodiment of the invention includes the use of specific strains of Thiobacillus denitrificans which will withstand high sulfide concentrations and be resistant to a common biocide. The process of the invention may be carried out by various techniques such as in a continuous bioreactor system. The invention is particularly applicable to treating natural gas containing hydrogen sulfide and producing a biomass byproduct.

BRIEF DESCRIPTION OF THE DRAWINGS

Figure 1 is a flow diagram of the preferred embodiment of the invention.

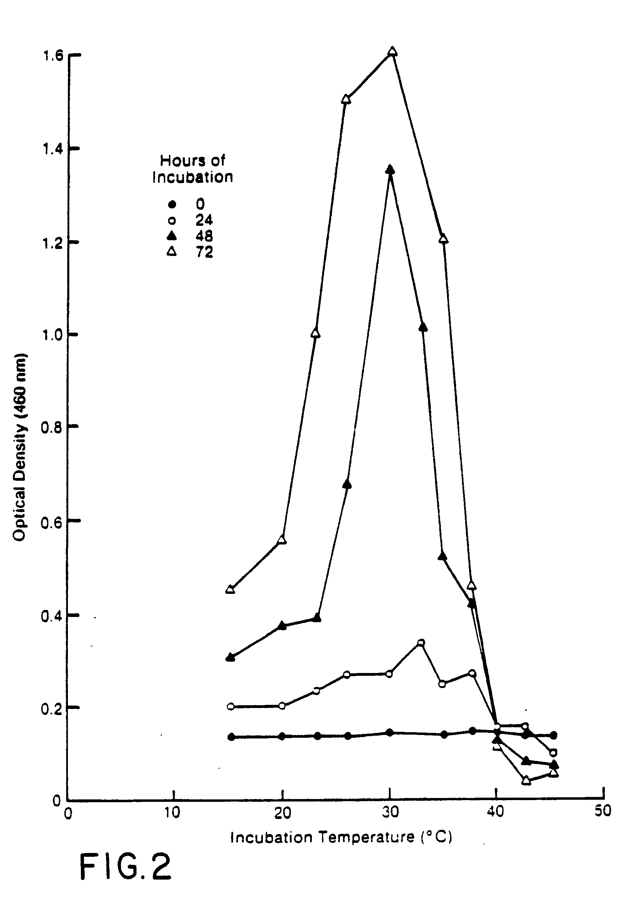

Figure 2 is a graph showing the effect of temperature on the growth of Thiobacillus denitrificans .
Figure 3 is a graph showing the viability of Thiobacillus denitrificans in free suspension in liquid medium without an energy source.

DESCRIPTION OF PREFERRED EMBODIMENTS

Introduction

With the exception of photosynthetic organisms, the majority of the biological world derives energy from the oxidation of organic compounds. However, there exists a group of microorganisms, predominantly bacteria, which may derive metabolic energy and reducing equivalents for biosynthesis from the oxidation of inorganic elements and compounds. These microorganisms may also derive carbon for biosynthesis from

3

an inorganic source such as carbon dioxide. This is termed a chemoautotrophic mode of metabolism. The present invention employs such bacteria and such mode of metabolism in order to remove sulfides from gas streams.

A microbial gas desulfurization process offers several advantages which make the process commercially viable. These include the following:

1. Direct conversion of hydrogen sulfide to sulfate is possible with no requirement for secondary sulfur recovery.

2. The energy requirements are low since the process operates at ambient or near ambient temperatures.

3. The nutrient is predominantly inexpensive mineral salts resulting in a low cost for chemicals.

4. The pH is moderate so that there are minimal corrosion problems.

5. No hazardous wastes are generated and there is minimal disposal problems.

6. The process produces a high protein biomass which could represent a salable product.

The ideal microorganism upon which to base a microbial hydrogen sulfide removal process must possess several characteristics in addition to the ability to oxidize hydrogen sulfide. The ideal microorganism should have simple nutritional requirements in order to minimize chemical costs. Preferably the organism would be a strict autotroph, that is, the organism would be capable of deriving all of its metabolic needs from inorganic sources. The ideal organism would also be capable of hydrogen sulfide oxidation in an anaerobic environment thereby avoiding possible oxygen contamination of the gas. Preferably, the ideal organism would produce a soluble oxidation product from the hydrogen sulfide in order to facilitate separation of the oxidation product from the biomass. The organism should also be capable of utilizing a highly soluble terminal acceptor that may be easily supplied in high concentrations. (In order to generate metabolic energy, any organism requires the presence of a particular chemical species to accept the electrons generated by the oxidation of nutrients. For most organisms, this species is oxygen. For those organisms capable of growth in an oxygen free environment, another chemical species is substituted which, in the case of the present invention, is supplied by the oxides of nitrogen.) The ideal organism would also exhibit a small size and simple morphology so that it can be easily maintained in suspension. Many microorganisms produce an extracellular slime layer or capsid which can cause the microorganisms to adhere to walls and to each other. The ideal organism for hydrogen sulfide removal applications should not produce a capsid in order to prevent problems in transport of the organism. A useful organism should also be able to withstand high pressures and to withstand moderately high temperatures. An optimal pH near neutral would be desirable in order to minimize corrosion. Of course, the ideal microorganism would also exhibit a high rate of hydrogen sulfide oxidation per unit biomass.

Many chemolithotrophic bacteria are capable of utilizing the oxidation of elemental sulfur and reduced or partially reduced sulfur compounds as a source of energy and reducing equivalents. However, taking into consideration the above factors, the bacterium Thiobacillus denitrificans have been discovered to be uniquely suitable for the objects of the present invention.

Thiobacillus denitrificans

Thiobacillus denitrificans (T. denitrificans) was first isolated in 1904 by innoculation of an aqueous medium containing $MgCl_2$, $K_2HPO_4$, $KNO_3$, $Na_2CO_3$ and a sediment of elementary sulfur and $CaCO_3$ with canal water or mud. A bacterial flora developed which oxidized the sulfur to sulfate and simultaneously reduced nitrate to elemental nitrogen. This was the first evidence of the existence of a chemolithotrophic bacterium which could survive in the absence of oxygen. It was subsequently shown that thiosulfate could be substituted for elemental sulfur. It was later demonstrated that a reduced nitrogen source was required for growth and T. denitrificans was cultivated in a defined medium for the first time. (Baalsrud, K. and K. S. Baalsrud, "Studies on Thiobacillus denitrificans ," Arch. Mikro., 20 , 34-62 Mikro., 20 , 34-62 (1954)). This achievement led to the first thorough study of the growth characteristics of the bacterium. These same authors reported the following:

1) T. denitrificans is a facultative anaerobe utilizing oxygen under aerobic conditions or nitrate under anaerobic conditions as terminal electron acceptor.

2) T. denitrificans is an obligatory autotroph; that is, it cannot derive its metabolic needs from organic sources but is strictly dependent upon elemental sulfur and reduced sulfur compounds as energy sources and carbon dioxide as a carbon source.

3) Nitrate cannot serve as a sole source of nitrogen. Ammonia nitrogen is required for growth.

4) Iron is required for growth. Good growth was reported in media containing 0.25-8.3 micrograms Fe/ml.

4

5) The optimum pH for growth of T. denitrificans is in the range of 6.2-7.0. The organism is rapidly deactivated below pH 6.0.

Although it has been amply demonstrated that thiosulfate and elemental sulfur may be utilized as energy sources with oxidation to sulfate, the utilization of sulfide as an energy source by T. denitrificans, as well as other Thiobacilli, has been the subject of some controversy in the past. Some investigators have reported that cultures of T. denitrificans provided with sulfide, usually supplied as $Na_2S$, as the sole energy source failed to show an increase in protein content or sulfate concentration in batch reactors. Others have observed the oxidation of sulfide by whole cells or cell free extracts of T. denitrificans and other Thiobacilli. The deposition of elemental sulfur in growing cultures has been observed causing some investigators to speculate that sulfide was oxidized to elemental sulfur and thiosulfate purely chemically and that these products were the true substrates for the Thiobacilli. It is now apparent that those investigators who reported that T. denitrificans was incapable of growth on sulfide as an energy source came to an erroneous conclusion due to the very high initial sulfide concentrations used in their experiments (5-8 mM). Soluble sulfide is toxic to Thiobacilli, as well as other microorganisms, in elevated concentrations. It has been demonstrated that T. denitrificans will grow anaerobically on sulfide as an energy source if sulfide is used as the growth limiting factor in a chemostat. (Timmer-ten Hoor, A., "Energetic Aspects of the Metabolism of Reduced Sulphur Compounds in Thiobacillus denitrificans," Antonie van Leeuwenhoek, 42, 483-492 (1976)-). Under these conditions, the concentration of sulfide in the culture is maintained at very low levels and sulfide was oxidized to sulfate.

Although this work established the ability of T. denitrificans to utilize sulfide as an energy source under anaerobic and sulfide limiting conditions, little was known about the stoichiometry or the specific activity of the organism for $H_2S$ oxidation prior to this work.

Growth and Maintenance of Cultures

The routine maintenance of T. denitrificans for stock cultures in a medium containing sulfide as an energy source would require continuous or semi-continuous addition of sulfide in such a way that sulfide did not accumulate to inhibitory levels in the culture but sufficient substrate was made available for growth. Although this could be done within the scope of the present invention, the obvious difficulties associated with routine day-to-day maintenance of cultures in a sulfide medium can be avoided by use of a non-toxic substrate, preferably thiosulfate. A typical thiosulfate maintenance medium is given by Tables 1 to 3.

## TABLE 1

### Maintenance Medium

| Component | per liter | |
|---|---|---|
| $Na_2HPO_4$ | 1.2 | g |
| $KH_2PO_4$ | 1.8 | g |
| $MgSO_4 \quad 7H_2O$ | 0.4 | g |
| $NH_4Cl$ | 0.5 | g |
| $CaCl_2$ | 0.03 | g |
| $MnSO_4$ | 0.02 | g |
| $FeCl_3$ | 0.02 | g |
| $NaHCO_3$ | 1.0 | g |
| $KNO_3$ | 5.0 | g |
| $Na_2S_2O_3$ | 10.0 | g |
| Heavy metal solution | 15.0 | ml |
| Mineral water | 50.0 | ml |

## TABLE 2
### Heavy Metal Solution

| Component | per liter | |
|---|---|---|
| EDTA (Ethylenediaminetetraacetic acid) | 1.5 | g |
| $ZnSO_4 \ 7H_2O$ | 0.1 | g |
| Trace element solution | 6.0 | ml |

## TABLE 3
### Trace Element Solution

| Component | per liter | |
|---|---|---|
| $AlCl_3 \ 6H_2O$ | 0.51 | g |
| KI | 0.14 | g |
| KBr | 0.14 | g |
| LiCl | 0.14 | g |
| $H_3BO_3$ | 3.06 | g |
| $ZnCl_2$ | 0.28 | g |
| $CuCl_2 \ 2H_2O$ | 0.33 | g |
| $NiCl_2 \ 6H_2O$ | 0.51 | g |
| $CoCl_2 \ 6H_2O$ | 0.51 | g |
| $SnCl_2 \ 2H_2O$ | 0.14 | g |
| $BaCl_2 \ 2H_2O$ | 0.16 | g |
| $Na_2MoO_4 \ 2H_2O$ | 0.16 | g |
| $CuSeO_4 \ 5H_2O$ | 0.14 | g |
| $NaVO_3$ | 0.024 | g |

The thiosulfate in the maintenance medium is the energy source, nitrate is the terminal electron acceptor, bicarbonate is the carbon source and ammonium is the nitrogen source. The medium also includes a phosphate buffer and sources of various essential mineral nutrients. This maintenance medium is similar to the S-8 medium for Thiobacilli recommended by the American Type Culture Collection except that ammonium chloride has been substituted for ammonium sulfate as the source of reduced nitrogen with an increase in the concentration of ammonium ion, the concentrations of sodium bicarbonate and hydrated magnesium sulfate have been increased and a known source of trace elements has been added.

Oxidation of Hydrogen Sulfide

To produce a culture of T. denitrificans to be utilized for the removal of $H_2S$ from a gas, the organism

6

would typically be grown in the thiosulfate maintenance medium at 30°C and a pH of 7.0 to an optical density at a wavelength of 460 nanometers ($OD_{460}$) of approximately 1.0. This optical density corresponds to greater than $10^9$ cells per ml. As has previously been indicated, the purpose of this cultivation on thiosulfate is to develop a sufficient concentration of biomass so that hydrogen sulfide can be fed to the reactor at an appreciable rate without exceeding the bio-oxidation capabilities of the biomass. Otherwise, sulfide would accumulate in the culture. While growing on thiosulfate a gas feed of 5 mol % $CO_2$ in $N_2$ at a rate of approximately 20 ml/min/l of culture is advisable to ensure continuous availability of a carbon source.

The pathways for sulfide and thiosulfate oxidation to sulfate in T. denitrificans are not independent but have two common intermediates. In the presence of thiosulfate the rate of sulfide oxidation would be reduced because of competition for enzymes of the sulfur pathway. Therefore prior to the introduction of $H_2S$ to T. denitrificans cultures, residual thiosulfate must be removed. This may be accomplished by collecting the cells by filtration or centrifugation and resuspension in fresh maintenance medium without thiosulfate. A purge of the suspension with 5% $CO_2$ in $N_2$ is advisable to allow residual thiosulfate to be metabolized. Hydrogen sulfide may then be introduced into the reactor at loadings of 4-5 mmoles $H_2S$/hr/g dry wt. of biomass.

It should be noted parenthetically that thiosulfate may also be eliminated by cultivating the cells to the point that all thiosulfate is metabolized. However, under thiosulfate limiting conditions, nitrite, which is toxic to T. denitrificans , has been observed to accumulate in the reactor medium. This leads to unstable behavior during the initial hours of operation. The nitrite is eventually metabolized and eliminated.

When $H_2S$ is introduced to a culture of T. denitrificans previously grown on thiosulfate, the $H_2S$ is immediately metabolized with no apparent lag. Under sulfide limiting conditions, less than 0.001 mM of total sulfide can be detected in the reactor medium. Provided then that the feed gas exits the reactor in equilibrium with the medium, very low levels of $H_2S$ in the outlet gas can be achieved (less than 1 ppmv). With 10,000 ppm $H_2S$ in the feed gas at one atmosphere, residence times in the range of 1-2 s are required if the average bubble diameter is approximately 0.25 cm.

The introduction of $H_2S$ into a batch T. denitrificans reactor results in the accumulation of sulfate and biomass with a corresponding decrease in the nitrate and ammonium concentrations. No elemental sulfur or nitrite accumulates in the reactor. The stoichiometry of the reaction in a batch reactor is given by Table 4.

## TABLE 4

### Stoichiometry of Anaerobic H₂S Oxidation by T. denitrificans in Batch Reactors

| | | |
|---|---|---|
| $SO_4^{-2}/H_2S$ | 1.00 | mole/mole |
| $NO_3^{-}/H_2S$ | 1.36 | mole/mole |
| $NH_4^{+}/H_2S$ | 0.12 | mole/mole |
| $OH^{-}/H_2S$ | 1.60 | equivalents/mole |
| $Biomass/H_2S$ | 12.1 | grams/mole |

Certain aspects of the stoichiometry of any microbial process are affected by the environment and the growth rate of the microbial cells. During batch growth these parameters are constantly changing. In a continuous stirred tank reactor (CSTR) system, where a fresh nutrient feed (maintenance medium minus thiosulfate) is fed to the reactor at the same rate at which mixed liquor is removed from the reactor, and where there is complete mixing, the environment and growth rate are held constant. Each of these parameters is controlled by the dilution rate at which the reactor is operated. The dilution rate D is defined by Equation (1) where q is the volumetric flow rate of nutrient to the reactor and v is the culture volume.

$$D = q/v \qquad\qquad (1)$$

In a CSTR configuration, the stoichiometric parameters of anaerobic $H_2S$ oxidation by T. denitrificans most affected by dilution rate are the $OH^{-}/H_2S$ ratio and the yield of biomass per mole $H_2S$ oxidized. With

increasing dilution rates the $OH^-/H_2S$ ratio will decrease since more buffering capacity from the nutrient feed is available for maintaining pH. For example, at D = $0.029hr^{-1}$, $OH^-/H_2S$ is approximately 1.37. At D = $0.058hr^{-1}$, $OH^-/H_2S$ is approximately 1.24. Yield of biomass will be greater at higher dilution rates since a greater fraction of' substrate ($H_2S$) supports biosynthesis at higher growth rates. The yield of biomass (Y) in grams dry weight/mole $H_2S$ will be given by Equation (2) where $\mu$ = is the specific growth rate of T. denitrificans. The specific growth rated $\mu$ is defined by Equation (3) and is equal to the dilution rate for a CSTR configuration.

$$Y = 21.1\mu/(\mu + 0.0367) \qquad (2)$$

$$\mu = R_x/X \qquad (3)$$

where $R_x$ = Rate of biomass formation per unit volume
X = Concentration of biomass

Indications of Upset and Recovery from Upset Conditions

Since $H_2S$ is an inhibitory substrate, it is imperative that the $H_2S$ feed rate to a T. denitrificans reactor not exceed the maximum capacity of the biomass for $H_2S$ oxidation. If the $H_2S$ oxidation capacity of the biomass is exceeded, sulfide will accumulate in the reactor medium and inhibit the complete oxidation of $H_2S$. Reactor upset is first detected by the appearance of nitrous oxide ($N_2O$) in the reactor outlet gas. $N_2O$ results from the incomplete reduction of nitrate. This is followed by $H_2S$ breakthrough and the accumulation of elemental sulfur in the reactor medium. The upset condition is reversible if exposure to the accumulated sulfide is not prolonged. Reduction in $H_2S$ feed rate following an upset condition will reduce $H_2S$ and $N_2O$ concentrations in the outlet gas to pre-upset levels. In addition, elemental sulfur which accumulated during upset will be oxidized to sulfate upon reduction in $H_2S$ feed rate. The maximum loading of a T. denitrificans culture will be somewhat dependent upon both the metabolic state (growth rate) of the biomass and the environment of the biomass. Maximum loadings in the range of 5.0-8.0 mmoles $H_2S$/hr/g dry wt. biomass may be expected.

Effect of Heterotrophic Contamination

The medium described by Tables 1-3 will not support the growth of heterotrophic microorganisms since there is no organic carbon source. However, if aseptic conditions are not maintained in the operation of a T. denitrificans reactor, heterotrophic contamination will develop in the reactor. T. denitrificans releases organic material into the medium in the normal course of growth or through lysis of nonviable cells. This organic material then supports the growth of facultatively anaerobic heterotrophs which are capable of using nitrate as a terminal electron acceptor. In a T. denitrificans CSTR operated nonaseptically, the concentration of heterotrophic contaminants will level off and remain constant after a time. The steady state concentration of contaminant is not surprisingly dependent upon the concentration of T. denitrificans . Contaminant levels of up to 10% of the T. denitrificans concentration can be expected. Although the presence of a heterotrophic contamination can affect the end use of the biomass product of the process, the contamination does not affect $H_2S$ oxidation by T. denitrificans .

Characterization of Thiobacillus denitrificans

Other factors pertinent to the operation of a microbial gas desulfurization process include the effects temperature and pressure, toxicity of other sulfur compounds which may contaminate the feed gas, effects of accumulating sulfate on cell activity and the effect on viability of maintenance in liquid culture in the absence of an energy source.

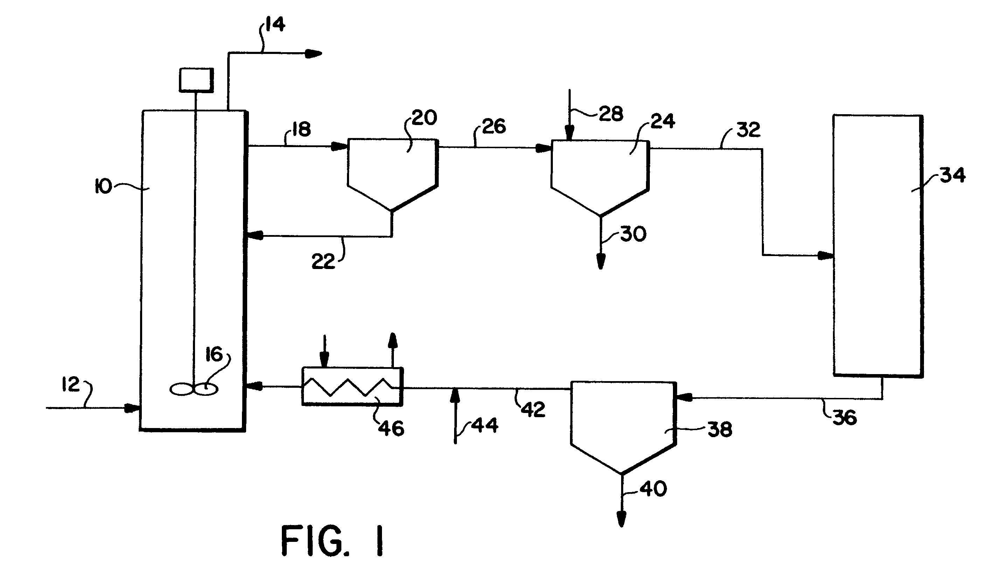

The optimum temperature for growth of T. denitrificans has been reported as 30°C. However, a temperature profile indicating relative growth rates above and below this optimum has not been published. A temperature profile is necessary to predict the effects of a temperature excursion or temperature gradients on overall and local growth rates in a culture. This can be especially important in the case of an inhibitory substrate where a general or localized decrease in growth rate could result in accumulation of the substrate to toxic concentrations. A temperature profile for T. denitrificans ATCC 23642 growing anaerobically on thiosulfate is given in Figure 1 which indicates optimal growth over a relatively narrow range of temperatures with complete inhibition of growth above 40°C. However, viable counts have shown that at temperatures as high as 45°C, no measurable effect on viability is observed for exposures of up to 5 hours.

Growth of T. denitrificans in thiosulfate medium at 30°C at elevated pressures indicates that total pressure has no significant effect on growth at pressures of up to 1800 psig $N_2$ or 1000 psig $CH_4$. These results are shown in Table 5. Viability was demonstrated at the conclusion of each test by growth on thiosulfate agar and no heteotropic contamination was indicated in that no growth appeared on nutrient agar. In a microbial gas desulfurization process the microorganisms may be subjected to rapid pressurization-depressurization cycles. Table 6 summarizes the results of rapid pressurization-depressurization at 1250 psig of $N_2$ on viable count in a culture of T. denitrificans originally grown at that pressure on thiosulfate. Table 6 indicates that repeated pressurization-depressurization has no significant effect on viability.

## TABLE 5

### Effect of Pressure on Growth of T. denitrificans on Thiosulfate in Liquid Culture

| Culture | Press. MPa | Gas | Incubation Time (days) | Optical Density (460 nm) |
|---|---|---|---|---|
| TEST | 2.76 | $N_2$ | 3 | 1.10 |
| CONTROL | 0 | | 3 | 1.14 |
| TEST | 4.14 | $N_2$ | 4 | 1.05 |
| CONTROL | 0 | | 4 | 1.20 |
| TEST | 5.17 | $N_2$ | 3 | 0.75 |
| CONTROL | 0 | | 3 | 1.20 |
| TEST | 6.89 | $N_2$ | 3 | 0.75 |
| CONTROL | 0 | | 3 | 1.00 |
| TEST | 8.55 | $N_2$ | 3 | 0.75 |
| CONTROL | 0 | | 3 | 0.83 |
| TEST | 12.41 | $N_2$ | 3 | 1.08 |
| CONTROL | 0 | | 3 | 0.87 |
| TEST | 3.45 | $CH_4$ | 3 | 0.85 |
| CONTROL | 0 | | 3 | 0.80 |
| TEST | 6.89 | $CH_4$ | 3 | 1.20 |
| CONTROL | 0 | | 3 | 0.62 |

## TABLE 6

### Effect of Sequential Pressurization-Depressurization Cycles at 8.62 MPa (1250 psig) $N_2$ on Viability of T. denitrificans in Liquid Culture

| Pressurization/ Depressurization Cycles | Viable Count (cells/ml) |
|---|---|
| 0 | $5.2 \times 10^8$ |
| 1 | $3.9 \times 10^8$ |
| 2 | $4.2 \times 10^8$ |
| 3 | $3.4 \times 10^8$ |
| 4 | $4.3 \times 10^8$ |

Various sulfur compounds common to natural gas are somewhat toxic to T. denitrificans . Those compounds are methyl mercaptan ($CH_3SH_3$), carbon disulfide ($CS_2$), carbonyl sulfide (COS) and dimethyl sulfide ($CH_3SCH_3$). The order of toxicity to wild type T. denitrificans is $CH_3SH > CS_2 > COS$, $CH_3SCH_3$. All are toxic at a partial pressure of 26,7kPa (200 mmHg). At partial pressures sufficiently low to be tolerated none are metabolized.

As $H_2S$ is oxidized by T. denitrificans , a sulfate salt accumulates in the medium. The counter ion of the sulfate in this salt will be determined by the counter ion of the hydroxide equivalents added to the culture to maintain pH and the counter ion of the nitrate salt which furnishes the terminal electron acceptor. For example, if $KNO_3$ is the nitrate source and KOH is the alkali used for pH control, the oxidation product of $H_2S$ is primarily present as $K_2SO_4$. Whether the reactor is operated batchwise or on a continuous basis, the concentration of sulfate salt will be dependent upon the rate of $H_2S$ oxidation per unit volume of culture. The tolerance of T. denitrificans for the accumulating sulfate salt, therefore, has a major influence on the operation of the reactor. Wild type T. denitrificans is tolerant of up to 350 mM $K_2SO_4$ when grown anaerobically on $H_2S$. Above approximately 400 mM, incomplete oxidation of $H_2S$ is observed with the accumulation of elemental sulfur and production of $N_2O$. The organism is less tolerant of $Na_2SO_4$; however, normal reactor operation is observed at $Na_2SO_4$ concentrations of 250-300 mM. $(NH_4)_2SO_4$ causes incomplete $H_2S$ oxidation at concentrations above 150-200 mM.

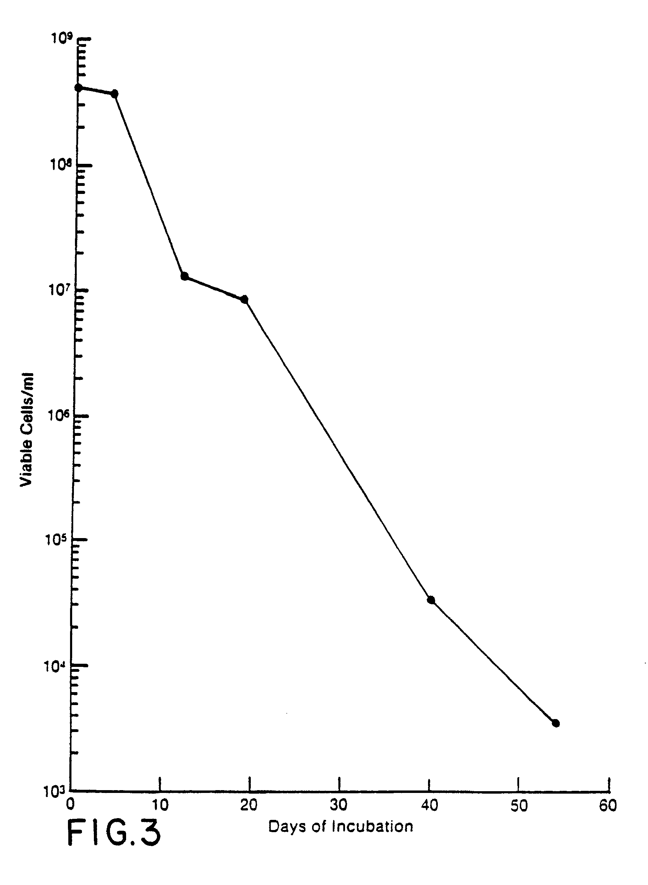

As stated above, another factor pertinent to the operation of a microbial gas desulfurization process is the effect on viability of maintenance in liquid culture in the absence of an energy source as would occur if the gas source were shut off for a period of time. As illustrated by Figure 3, the viable count in a culture of T. denitrificans decreases with time in the absence of an energy source. However, if a working culture contains at least $10^9$ cells/ml, a sufficient number of viable cells will exist after as much as 20 days to provide an adequate innoculum to restart the process if care is taken not to overload the biomass.

Another factor which will influence the economics of a microbial gas desulfurization process is the value of the biomass produced. The protein content of T. denitrificans whole cells grown on $H_2S$ is 60% ± 3% by dry weight. This protein content is intermediate between that of soybean meal (51%) and fish meal (72%), the two most commercially important sources of bulk protein. The quality of a bulk protein source as a food supplement is dependent not only upon the protein content but also upon the amino acid composition of that protein. Table 7 gives the amino acid composition of T. denitrificans whole cell protein when the organism is grown on $H_2S$. Table 8 compares the amino acid composition of T. denitrificans whole cell protein, with respect to the ten essential amino acids in a mammalian diet, to that of soybean meal and fish meal. Table 8 indicates that T. denitrificans whole cell protein, on a g/100 g basis, contains more of nine of these amino acids than soybean meal. The only possible exception is tryptophan which has not been determined for T. denitrificans protein. Fish meal contains greater quantities of isoleucine, lysine, threonine and possibly tryptophan. The cysteine content of T. denitrificans is so low as to be undetectable.

## TABLE 7

### Amino Acid Composition of T. denitrificans Whole Cell Protein

| Amino Acid | g/100 g Protein |
| --- | --- |
| Alanine | 7.8 |
| Arginine | 7.3 |
| Aspartic Acid + Asparagine | 10.3 |
| Glutamic Acid + Glutamine | 11.1 |
| Glycine | 5.2 |
| Histidine | 5.5 |
| Isoleucine | 5.4 |
| Leucine | 9.7 |
| Lysine | 7.1 |
| Methionine | 3.7 |
| Phenylalanine | 4.4 |
| Proline | 4.4 |
| Serine | 3.4 |
| Threonine | 4.4 |
| Tyrosine | 3.7 |
| Valine | 6.7 |

## TABLE 8

### Essential Amino Acid Content of
### T. denitrificans Protein Compared to
### Soybean Meal and Fish Mean Proteins

| Amino Acid | g/100g Protein | | |
| --- | --- | --- | --- |
| | Soybean Meal | Fish Meal | T. denitrificans |
| Arginine | 6.2 | 6.8 | 7.3 |
| Histidine | 2.1 | 2.8 | 5.5 |
| Isolencine | 4.9 | 6.3 | 5.4 |
| Leucine | 6.6 | 9.4 | 9.6 |
| Lysine | 5.6 | 9.4 | 7.1 |
| Methionine | 1.2 | 3.5 | 3.7 |
| Phenylalanine | 4.3 | 4.3 | 4.4 |
| Threonine | 3.3 | 4.7 | 4.4 |
| Tryptophan | 1.2 | 1.1 | - |
| Valine | 4.7 | 6.5 | 6.7 |

Mutant Strains

The present invention includes not only the use of wild strains of T. denitrificans such as ATCC 23646 (American Type Culture Collection, Rockville, Maryland), but also mutant strains. For example, sulfide tolerant strains of T. denitrificans are desirable to make the proposed microbial gas desulfurization process more resistant to upset from excess $H_2S$ feed and possibly more tolerant of other sulfur compounds. A biocide resistant strain could provide a means of controlling heterotrophic contamination and therefore produce a microbially pure biomass product without the expense of maintaining aseptic conditions by sterilization of feed streams. Therefore, the term T. denitrificans as used herein and in the claims includes mutations.

Continuous Flow Reactor with Biomass Recycle

A simple CSTR is an economically impractical reactor configuration with respect to volumetric productivity for the proposed microbial gas desulfurization process except where very small amounts of $H_2S$ are removed. However, a completely mixed, homogeneous environment for the cells is required to avoid localized inhibitory concentrations of sulfide. The most practical reactor configuration presently contemplated for a microbial gas desulfurization process based on T. denitrificans is a CSTR with biomass recycle. Recycle of the biomass allows much higher biomass concentrations to be maintained in the reactor. In addition, with biomass recycle, the hydraulic retention time and biomass retention time are decoupled. Therefore, high dilution rates can be used to replenish the culture medium and control the environment of the cells. Biomass concentration and the quality of the cells' environment will be the two most important variables in maximizing volumetric productivity while maintaining reactor stability. With cell recycle, these two variables are independently controlled.

For a CSTR with biomass recycle, the microbial cells must continuously be harvested from the reactor liquid waste stream. The more common methods of continuous harvesting of microbial cells include continuous centrifugation and tangential flow filtration. An alternative to harvesting and recycle of free cell biomass is the use of an immobilized biomass which is the preferred embodiment of the present invention as will be described hereinafter. If the immobilization matrix is sufficiently dense, biomass from the reactor effluent may be harvested by low gravity sedimentation. An immobilization matrix appropriate for growing cells must allow release of new cells into the surrounding medium. Therefore, the reactor effluent will contain both immobilized cells which could be readily recovered and recycled and free cells. If the free cells are to represent a process credit, they must be recovered. Therefore, even when immobilized cells are utilized, a free cell recovery problem still exists. However, since these cells are not recycled back to the reactor, treatment of the process stream (with a flocculating agent, for example) to improve sedimentation properties can be tolerated.

The particular immobilization matrix does not form a part of the present invention and any known matrix material may be used which is suitable for the T. denitrificans . By way of example only, see US-A-4 153 510 and 4 286 061. Also, any suitable procedure well known in the prior art for immobilizing T. denitrificans cells on the matrix material can be used in the present invention as long as the cells may grow and divide while releasing new cells from the matrix.

Referring now to Figure 1, the immobilized biomass is loaded into the reactor 10 which is filled with maintenance medium without thiosulfate. The hydrogen sulfide containing gas is passed into the reactor through line 12 and the treated gas with the $H_2S$ removed flows out line 14. The maintenance medium and immobilized biomass (the slurry) are stirred by the mixer 16 in order to achieve homogeneity, avoid localized inhibitory concentrations of sulfide and obtain good mass transfer.

Withdrawn from the reactor 10 is a slurry stream 18 which contains partially spent nutrient, free floating bacteria which have been expelled from the immobilizing support material and the dissolved sulfate formed in the reactor during the $H_2S$ removal process. A form of filtration may be employed to prevent the immobilized biomass from being withdrawn from the reactor along with the slurry. Alternatively, immobilized biomass withdrawn from the reactor along with the slurry is removed from the slurry in separator 20 and recycled to the reactor through line 22. This separator 20, for example, may be a conventional settling basin or hydrocyclone.

The slurry from the separator 20 is then passed to the settler 24 through line 26 to form the removal of the free cell bacterial biomass. The preferred method of accomplishing this removal is by introducing a flocculating agent as indicated at 28 into the slurry to assist in the agglomeration and settling of the bacterial biomass. The bacterial biomass product is then removed from the settler as indicated at 30. The remaining liquid from the settler 24 now contains the spent nutrient and the sulfate. This liquid is passed through line 32 into the evaporator/fractional crystallizer 34. In the evaporator/fractional crystallizer, the process is controlled depending upon the relative concentrations of the sulfate and the remaining nutrients in the liquid such that only the sulfate is crystallized or such that the crystallized sulfate will contain only that amount of nutrient which has also been crystallized which can be tolerated in the sulfate product depending upon its intended end use. The product from the evaporator/fractional crystallizer 34 is passed through line 36 to the separator 38 where the crystals are separated from the remaining liquid. The separated crystals containing primarily the sulfate is removed from the settler 38 through line 40. The liquid from the settler 38 contains primarily only the remaining nutrient materials which were present in the withdrawn spent nutrient. This liquid is recycled through line 42 to the reactor 10 along with fresh nutrient introduced through line 44 to replenish the spent nutrient. As shown in Figure 1, the system for practicing this invention includes a temperature controlling heat exchanger 46 in which the medium being fed into the reactor 10 is controlled to a temperature of about 30°C if wild type T. denitrificans is utilized or a higher temperature if a temperature tolerant strain is utilized. It may also be advantageous to precondition the makeup medium being introduced through line 44 to the optimal temperature. Further measures which can be employed to control temperature is to precondition the entering gas 12 to the optimal temperature, include a heat exchanger within the reactor 10 and insulate reactor 10.

For the purpose of giving a specific example of the present invention, the treatment of $25 \times 10^6$ standard cubic feed/day ($7.08 \times 10^8$ standard liters/day) of natural gas at 600 psig (42 atmospheres or 4238 kilopascals absolute) containing 1.5 mol % $H_2S$ will be used. At 30°C the volumetric flow of gas at pressure is $1.78 \times 10^7$ liters/day. This gas stream will contain $1.87 \times 10^4$ gram-mol of $H_2S$ per hour. If a stable loading (sulfide limiting conditions) of 4.0 millimols $H_2S$ per hour per gram biomass is assumed then $4.68 \times 10^6$ g of T. denitrificans biomass will be required to treat the gas stream. With a suitable choice of immobilization matrix, immobilized whole cell reactors can be operated with 40% slurries of porous immobilization beads with low rates of attrition. Furthermore, the beads can develop internal populations of viable cells which pack the beads to 50% of their theoretical packing density. However, to be conservative, a 20% slurry of 200 μm beads with a maximum packing density of 25% of theoretical is assumed. This small bead diameter is selected to minimize internal mass transfer resistances. If a T. denitrificans cell is idealized as a cylinder with a diameter of 0.5 μm and length of 1.5 μm, a 200 μm bead would contain 1.67 × 10⁷ cells at maximum packing. A 20% slurry of beads would therefore contain 1.33 × 10¹⁴ cells per liter. A viable cell density of 10⁹ cells per milliliter is roughly equivalent to 0.5 grams dry weight of biomass per liter. Therefore, a 20% slurry of 200 micron beads with maximum cell packing would contain 67 grams per liter of immobilized cells. To be conservative, 50 grams per liter is chosen as a design basis. Therefore, if the free cell biomass is neglected, a total bubble free culture volume of 9.4 × 10⁴ liters will be required to treat the gas stream described above.

The economics of a microbial gas desulfurization process are obviously strongly influenced by the volumetric productivity of the bioreactor. A second important factor is the dilution rate at which the reactor is operated. Process economics are favored by lower dilution rates. The reactor effluent must be processed to recover biomass and the sulfate salt, both of which may be taken as a process credit. Lower dilution rates result in a lower rate of flow of the effluent stream and increased concentrations of free cell biomass and sulfate which reduce processing costs. As indicated by Equation (2), the yield of biomass decreases with decreasing dilution rate. However, the higher concentration of biomass in the effluent stream at lower dilution rates could economically offset the reduced yield. In addition, lower dilution rates decrease pumping costs which could be significant given the pressure at which the reactors may operate. However, the reduction of dilution rate to improve process economics has a limitation dictated by the tolerance of the biomass for the accumulating sulfate salt in the culture medium. The maximum concentration of the sulfate salt which can be tolerated without significant inhibition of growth, and therefore $H_2S$ oxidation, will determine the minimum dilution rate at which the reactor can be operated. As noted above, some control can be exerted by choice of the sulfate counter ion which is determined by the nitrate counter ion in the aqueous feed and the hydroxide counter ion in the pH adjusting solution.

## Claims

1. A method for treating a fluid stream containing a sulfide to remove said sulfide comprising the step of contacting said fluid stream under anaerobic conditions with a T. denitrificans culture suspended in a maintenance medium substantially free of thiosulfate whereby said sulfide is removed from said fluid stream by said T. denitrificans and converted to sulfate, and wherein the ratio of fluid stream flow to the quantity of T. denitrificans is such that the average maximum loading of sulfide is no greater than the maximum capacity of the T. denitrificans to remove the sulfide.

2. A method as claimed in Claim 1 wherein said fluid stream is a gas stream and wherein said sulfide is hydrogen sulfide and wherein the process of preparing the T. denitrificans culture suspended in a maintenance medium comprises the steps of:
   a. culturing T. denitrificans in the absence of $H_2S$ in a maintenance medium containing a quantity of thiosulfate to produce a desired population of T. denitrificans, thereby reducing said quantity of thiosulfate and forming a slurry of T. denitrificans in maintenance medium;
   b. removing any thiosulfate which may remain in said slurry, and
   c. introducing said slurry containing said population of T. denitrificans into a reactor containing maintenance medium free of thiosulfate.

3. A method as claimed in Claim 2 wherein the step of contacting the gas stream with the culture comprises the steps of:
   a. flowing said gas stream through said slurry in said reactor whereby said T. denitrificans removes said hydrogen sulfide under anaerobic conditions and produces sulfate and whereby said population of T. denitrificans increases to produce excess T. denitrificans;
   b. removing a portion of said slurry from said reactor, said slurry containing excess T. denitrificans and sulfate;
   c. removing at least a portion of said excess T. denitrificans and at least a portion of said sulfate from said removed slurry thereby leaving a remaining slurry; and
   d. recycling the remaining slurry back to said reactor.

4. A method as claimed in Claim 3 comprising the steps of:

a. immobilizing said population of T. denitrificans in immobilization matrices;

b. introducing said population of T. denitrificans in said immobilization matrices into the said reactor containing said maintenance medium free of thiosulfate;

c. flowing said gas stream through said slurry in said reactor whereby said population of T. denitrificans increases to produce excess T. denitrificans which are released from said immobilization matrices;

d. removing a portion of said immobilization matrices from said reactor with the portion of slurry that is removed;

e. removing from said slurry and recycling to said reactor said immobilization matrices containing said T. denitrificans and producing a remaining slurry;

f. removing from said remaining slurry said excess T. denitrificans to produce a T. denitrificans biomass produce and a spent maintenance medium containing sulfate, and

g. removing at least a portion of said sulfate from said spent maintenance medium and recycling said spent maintenance medium back to said reactor.

5. A method as claimed in Claim 4 and further including the step of introducing fresh maintenance medium to said reactor.

6. A method as claimed in Claims 1 to 6 whereby T. denitrificans multiply and comprising the step of recovering said T. denitrificans as a single cell protein product.

7. A method as claimed in Claims 1 to 6 wherein the temperature in said reactor is controlled to about 30° C.

8. A method as claimed in Claims 1 to 7 wherein the ratio of gas stream flow to the quantity of T. denitrificans being such that the average maximum loading of $H_2S$ is no greater than 8 millimoles of $H_2S$ per hour per gram dry weight of T. denitrificans;

## Revendications

1. Procédé pour traiter un courant de fluide contenant un sulfure en vue d'en éliminer ce sulfure, comprenant le stade de mettre le courant de fluide en contact, dans des conditions anaérobies, avec une culture de T. denitrificans en suspension dans un milieu d'entretien sensiblement exempt de thiosulfate de façon que le sulfure soit éliminé du courant de fluide par T. denitrificans et converti en sulfate, et dans lequel le rapport du débit du courant de fluide à la quantité de T. denitrificans est tel que la charge maximale moyenne de sulfure n'excède pas la capacité maximale de T. denitrificans pour éliminer le sulfure.

2. Procédé suivant la revendication 1, dans lequel le courant de fluide est un courant de gaz, dans lequel le sulfure est le sulfure d'hydrogène et dans lequel le procédé de préparation de la culture de T. denitrificans en suspension dans un milieu aqueux comprend les stades :

a. de cultiver T. denitrificans en l'absence de $H_2S$ dans un milieu d'entretien contenant une quantité de thiosulfate pour produire une population souhaitée de T. denitrificans, de manière à réduire la quantité de thiosulfate et former une dispersion de T. denitrificans dans le milieu d'entretien;

b. d'éliminer le thiosulfate qui peut éventuellement subsister dans la dispersion, et

c. d'introduire la dispersion contenant la population de T. denitrificans dans un réacteur contenant du milieu d'entretien exempt de thiosulfate.

3. Procédé suivant la revendication 2, dans lequel le stade de mettre le courant de gaz en contact avec la culture comprend les stades :

a. de faire passer le courant de gaz à travers la dispersion dans le réacteur de façon que T. denitrificans élimine le sulfure d'hydrogène dans des conditions anaérobies et produise du sulfate et qu'ainsi la population de T. denitrificans augmente jusqu'à produire un excès de T. denitrificans;

b. de prélever une fraction de la dispersion hors du réacteur, cette dispersion contenant T. denitrificans en excès et le sulfate;

c. de prélever au moins une partie de l'excès de T. denitrificans et au moins une partie du sulfate de la dispersion prélevée, de manière à laisser subsister une dispersion restante; et

EP 0 218 958 B1

d. de recycler la dispersion restante au réacteur.

4. Procédé suivant la revendication 3, comprenant les stades :

a. d'immobiliser la population de T. denitrificans dans des matrices d'immobilisation;

b. d'introduire la population de T. denitrificans dans les matrices d'immobilisation dans le réacteur contenant le milieu d'entretien exempt de thiosulfate;

c. de faire passer le courant de gaz à travers la dispersion dans le réacteur de façon que la population de T. denitrificans augmente pour produire un excès de T. denitrificans qui est dégagé des matrices d'immobilisation;

d. de prélever une fraction des matrices d'immobilisation hors du réacteur avec la fraction de dispersion qui est prélevée;

e. de prélever hors de la dispersion et de recycler au réacteur les matrices d'immobilisation contenant le T. denitrificans pour produire une dispersion restante;

f. de séparer de la dispersion restante l'excès de T. denitrificans pour obtenir une biomasse de T. denitrificans produite et un milieu d'entretien usé contenant du sulfate, et

g. d'éliminer au moins une partie du sulfate du milieu d'entretien usé et de recycler le milieu d'entretien usé au réacteur.

5. Procédé suivant la revendication 4, comprenant de plus le stade d'introduire du milieu d'entretien frais dans le réacteur.

6. Procédé suivant les revendications 1 à 5, dans lequel T. denitrificans se multiplie et comprenant le stade de recueillir T. denitrificans sous forme de produit protéique unicellulaire.

7. Procédé suivant les revendications 1 à 6, dans lequel la température dans le réacteur est réglée à environ 30° C.

8. Procédé suivant les revendications 1 à 7, dans lequel le rapport du débit de courant de gaz à la quantité de T. denitrificans est tel que la charge maximale moyenne de $H_2S$ n'excède pas 8 millimoles de $H_2S$ par heure par g de poids sec de T. denitrificans.

**Ansprüche**

1. Verfahren zur Behandlung eines Fluidstroms, der ein Sulfid enthält, zum Entfernen besagten Sulfids, das einen Schritt umfaßt, in dem besagter Fluidstrom unter anaeroben Bedingungen mit einer in einem im wesentlichen thiosulfatfreien Erhaltungsmedium suspendierten T. deni trificans -Kultur in Kontakt gebracht wird, wodurch besagtes Sulfid durch besagten T. denitrificans aus besagtem Fluidstrom entfernt und in Sulfat umgewandelt wird, und worin das Verhältnis des Pluidstromflusses zur Menge an T. denitrificans derart ist, daß die durchschnittliche maximale Sulfidbelastung nicht größer ist als die maximale Sulfidentfernungskapazität von T. denitrificans.

2. Verfahren nach Anspruch 1, worin besagter FluidStrom ein Gasstrom ist und worin besagtes Sulfid Schwefelwasserstoff ist und worin das Verfahren zur Herstellung der in einem Erhaltungsmedium suspendierten T. denitrificans-Kultur die folgenden Schritte umfaßt:

a. Kultur von T. denitrificans bei Abwesenheit von $H_2S$ in einem Erhaltungsmedium mit einer Menge an Thiosulfat zum Züchten einer gewünschten T.denitrificans -Population, wodurch besagte Thiosulfatmenge verringert und eine T. denitrificans-Schlamm im Erhaltungsmedium gebildet wird;

b. Entfernen des im besagten Schlamm eventuell noch vorhandenen Thiosulfats und

c. Einbringen des besagten Schlammes, der die besagte T. denitrificans-Population enthält, in einen thiosulfatfreies Erhaltungsmedium enthaltenden Reaktor.

3. Verfahren nach Anspruch 2, worin der Schritt, in dem der Gasstrom mit der Kultur in Kontakt gebracht wird, die folgenden Schritte umfaßt:

a. Fließenlassen des besagten Gasstroms durch besagten Schlamm in besagtem Reaktor, wodurch besagter T. denitrificans den besagten Schwefelwasserstoff unter anaeroben Bedingungen entfernt und Sulfat produziert und wodurch besagte T. denitri ficans -Population sich unter Bildung eines Überschusses an T. denitrificans vermehrt;

b. Entfernen eines Teils des besagten Schlamms aus besagtem Reaktor, wobei der besagte Schlamm einen T. denitrificans-Überschuß und Sulfat enthält;

c. Entfernen von zumindest einem Teil des besagten T. denitrificans-Überschusses und von zumindest einem Teil des besagten Sulfats aus dem besagten entfernten Schlamm, wodurch ein Rest an Schlamm verbleibt; und

d. Zurückführen des verbleibenden Schlamms in den besagten Reaktor.

4. Verfahren nach Anspruch 3, das die folgenden Schritte umfaßt:

a. Immobilisieren der besagten T. denitri ficans -Population auf Immobilisierungsmatrizen;

b. Einbringen der besagten T. denitrificans-Population auf den besagten Immobilisierungsmatrizen in den besagten Reaktor, der das besagte thiosulfatfreie Erhaltungsmedium enthält;

c. Fließenlassen des besagten Gasstroms durch besagten Schlamm in besagtem Reaktor, wodurch sich besagte T. denitrificans-Population unter Bildung eines T. denitrificans-Überschusses vermehrt, der von den besagten Immobilisierungsmatrizen freigesetzt wird;

d. Entfernen eines Teils der besagten Immobilisierungsmatrizen aus besagtem Reaktor mit dem Anteil des Schlamms, der entfernt wird;

e. Entfernen der besagten Immobilisierungsmatrizen, die besagten T. denitrificans enthalten, aus besagtem Schlamm, und das Zurückführen derselben zu besagtem Reaktor, und Entstehen eines verbleibenden Schlammes;

f. Entfernen des besagten T. denitrificans-Überschusses aus besagtem verbleibenden Schlamm zur Herstellung eines T. denitrificans-Biomasseprodukts und eines verbrauchten, sulfathaltigen Erhaltungsmediums, und

g. Entfernen von zumindest einem Teil des besagten Sulfats aus dem besagten verbrauchten Erhaltungsmedium und Zurückführen des besagten verbrauchten Erhaltungs-mediums in den besagten Reaktor.

5. Verfahren nach Anspruch 4, das weiterhin einen Schritt einschließt, in dem frisches Erhaltungsmedium in besagten Reaktor eingebracht wird.

6. Verfahren nach Ansprüchen 1 bis 6, wodurch sich T. denitrificans vermehrt und das einen Schritt umfaßt, in dem besagter T. denitrificans als "single cell protein"-Produkt wiedergewonnen wird.

7. Verfahren nach Ansprüchen 1 bis 6, worin die Temperatur in besagtem Reaktor auf ca. 30° C thermostatisiert ist.

8. Verfahren nach Ansprüchen 1 bis 7, worin das Verhältnis des Gasstromflusses zu der Menge an T. denitrificans derart ist, daß die durchschnittliche maximale $H_2S$-Belastung nicht mehr als 20 mmol $H_2S$ pro Stunde pro Gramm T. denitrificans -Trockengewicht beträgt.

18

FIG. I

FIG.2

FIG.3